# EUROPEAN PATENT APPLICATION

(11) **EP 0 542 459 A1**
(43) Date of publication of application: **19.05.1993**
(21) Application number: 92310049.9
(22) Date of filing: 03.11.1992
(51) Int. Cl.: A01D 34/48, A01D 34/70

(54) **Improvements in and relating to grass-cutting machines**

(30) Priority: 11.11.1991 GB 9123912
(71) Applicant: ELECTROLUX NORTHERN LIMITED, Newton Aycliffe Co. Durham, DL5 6UP (GB)
(72) Inventor: Dunn, Kenneth, Mowden Park, Darlington (GB)
(74) Representative: Arthur, Bryan Edward

(57) **Abstract**

This invention relates to grass cutting machines which may be supported by a cushion of air, wheels or a combination or air and wheels. The invention relates particularly to an improved means for collecting cut grass. More specifically, a grass cutting machine according to this invention comprises a grass cutter (B), a driving source (101) for driving the grass cutter (B), means for supporting the machine above ground datum (GD), a device (112) for collecting grass cut by cutter (B), a source (F) for establishing a flow of air, the device (112) for collecting cut grass comprising a duct (D) for directing cut grass entrained in a stream of air from the said source (F) and from
1. a collection mouth (I) at an upstream end thereof and disposed in the region of the ground datum (GD) and towards
2. a downstream end thereof (O) for collection by the collection device

at least one air intensifier outlet passage (D1) disposed adjacent to the collection mouth (I), for leading the stream of air to the collection mouth (I), each said passage (D1) including a generally convexly shaped air flow control surface (100B) over which, in use, at least a portion of the said stream is directed so as to create a zone of negative pressure which assists movement of the entrained cut grass over the air flow control surface (100B) and downstream through the duct (D) into the device (112) for collecting cut grass.

## Description

This invention relates to grass-cutting machines and, in particular to those types of machine described and claimed in our copending UK Patent Application No. 9103860.4 which is incorporated herein in its entirety.

In copending Application 9103860.4 reference is made to two main types of grass-cutting machines currently in production namely (1) a machine including a cutting system which is rotatable about an axis which is substantially vertical relative to ground datum, and (2) a machine having a cylindrical cutting unit which includes a plurality of blades and which, in operation is rotatable about an axis which is substantially parallel to ground datum, i.e. horizontal. Type (1) machines may be supported relative to ground datum by a cushion of air (commonly called a hover machine), by wheels (commonly called a wheeled rotary machine) or a combination thereof. A rear roller may also be used in order to produce a striped effect upon cut grass. Type (2) machines are normally supported on a combination of wheels and rollers. However, in our prior US Patent No. 4,738,086, there is described and claimed a type (2) machine which is supported on a cushion of air. The present invention is applicable to each of the aforesaid types of machine.

In our copending Application 9103860.4 a grass-cutting machine is described comprising grass cutter, a driving source for driving the grass cutter, means for supporting the machine above ground datum, a device for collecting grass cut by the cutter, a source for establishing a flow of air, the device for collecting cut grass comprising a duct for directing cut grass entrained in a stream of air from the said source and from:
1. a collection mouth at an upstream end of the duct and disposed in the region of the ground datum and towards
2. a downstream end of the duct for collection by the collection device,

at least one air-outlet aperture in the region of the collection mouth, each aperture serving to direct at least a portion of the stream of air downstream from the collection mouth so as to draw into the mouth cut grass and transport the cut grass through the duct to the collection device. According to a modification of the machine of 9103860.4, said at least one air aperture may include a generally convexly shaped air flow control surface arranged so that at least a portion of the said stream of pressure air follows the air flow control surface and is directed downstream within the duct

According to a first aspect of the present invention, a grass cutting machine comprises a hood in the form of an inverted dish enclosing a cutting chamber and having a rim defining an opening which, in use, confronts ground datum, a cutter mounted within the cutting chamber, a driving source for driving the grass-cutter, means for supporting the machine above ground datum, a source for establishing a stream of air for transporting cut-grass entrained in said stream from the cutting chamber into a collection device via at least one channel extending across the rim of the hood, each channel opening towards ground datum and constituting, with ground datum, an air intensifier passage establishing communication between the cutting chamber and the collection device, each channel including a generally convexly shaped flow control surface over which, in use, at least a portion of the stream of air is directed from the cutting chamber so as to create a zone of negative pressure which assists movement of the entrained cut grass over the flow control surface and into the collection device.

According to the second aspect of the present invention, a grass cutting machine comprises a hood in the form of an inverted dish enclosing a cutting chamber and having a rim defining an opening which, in use, confronts ground datum, a cutter mounted within the cutting chamber, a driving source for driving the grass-cutter, means for supporting the machine above ground datum, a source for establishing a stream of air for transporting cut-grass entrained in said stream from the cutting chamber into a collection device via a duct, the duct including a collection mouth opening towards ground datum and an outlet through which entrained cut grass is passed into the collection device, the rim including at least one channel opening towards ground datum, each channel constituting with ground datum an air intensifier passage establishing communication between the cutting chamber and the collection mouth of the duct, each channel and/or each duct including a generally convexly shaped flow control surface over which, in use, at least a portion of the stream of air is directed after passage from the cutting chamber so as to create a zone of negative pressure which assists movement of the entrained cut grass over the flow control surface and downstream of the duct into the collection device.

According to the present invention, a grass cutting machine comprises a grass cutter, a driving source for driving the grass cutter, means for supporting the machine above ground datum, a device for collecting grass cut by cutter, a source for establishing a flow of air, the device for collecting cut grass comprising a duct for directing cut grass entrained in a stream of air from the said source and from;
1. a collection mouth at an upstream end thereof and disposed in the region of the ground datum and towards
2. a downstream end thereof for collection by the collection device,

at least one air intensifier outlet passage disposed adjacent to the collection mouth for leading the stream of air to the collection mouth, each said passage including a generally convexly shaped air flow control surface over which in use, at least a portion of the said stream of pressure air is directed so as to create a zone of negative pressure which assists movements of the entrained cut grass over the air flow control surface and downstream through the duct into the device for collecting cut grass. Preferably each air intensifier outlet opens into the collection mouth and the air flow control surface directs the stream of air at a angle which is inclined towards the longitudinal axis in the duct and down strew of the duct.

Conveniently, the machine according to the present invention includes a hood, having an outwardly projecting rim, means for mounting the grass cutter and the source for establishing a flow of air within the hood wherein each air intensifier outlet aperture communicates between the duct and a region within the hood.

Preferably, the convexly shaped air flow control surface is part of the outwardly projecting flange of the hood.

Two hover-type grass cutting machines in accordance with the invention will now be described by way of example, with reference to the accompanying drawings in which:-

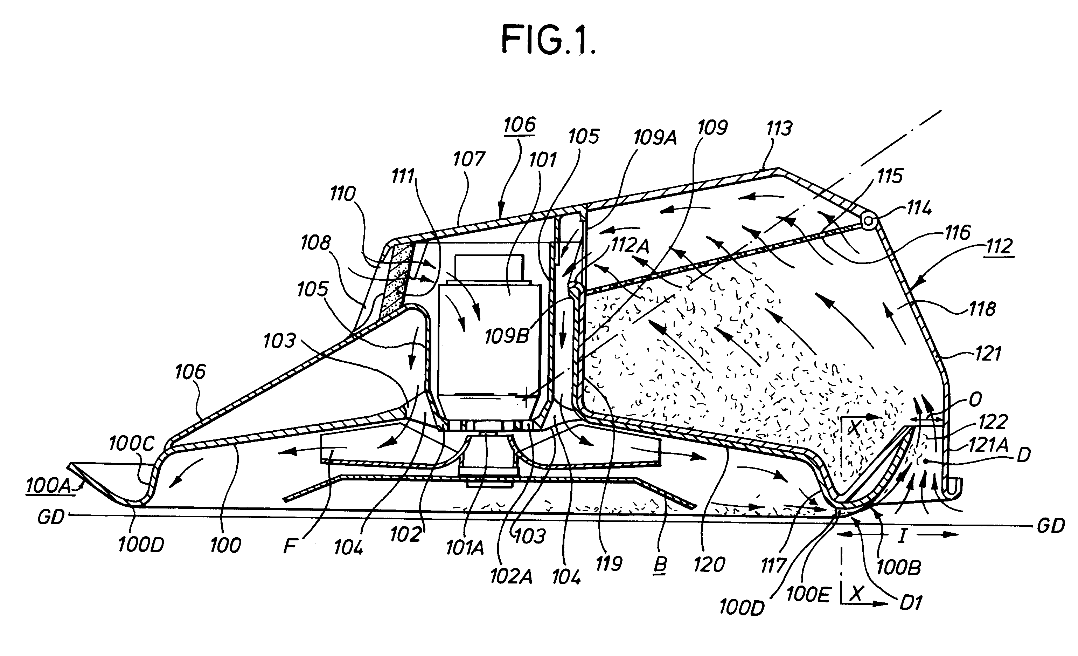

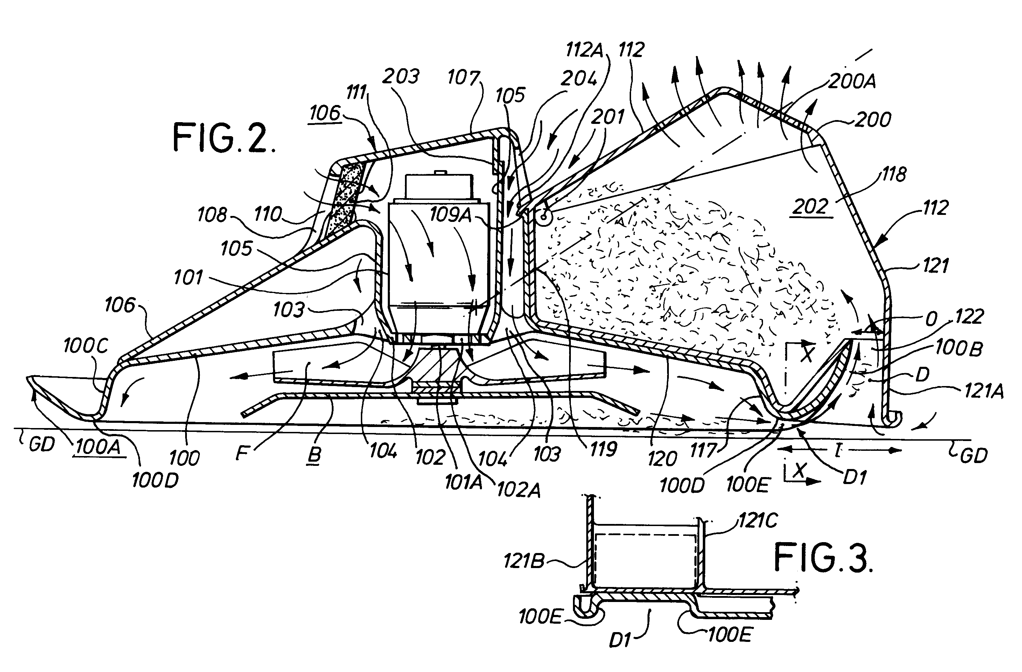

Figures 1 and 2 are longitudinal cross-sections of the two hover-type machines and Figure 3 is a section taken along lines X-X of Figures 1 and 2.

In the following description the same components of each machine are designated in the respective Figures by the same reference numbers.

Referring to Figure 1, a hood 100 having a peripheral rim 100A supports an electric motor 101 on a central support 102 which is moulded separately from or integrally with the hood 100. The peripheral rim 100A extends outwardly and upwardly from a depending skirt 100C by a gently curved region 100D.

A fan F and a cutting blade B are driven directly by the electric motor 101 and are, as shown, mounted coaxially on output shaft 101A of the motor.

The central support 102 is connected to the hood 100 by a number of spokes 103 and, between adjacent spokes, air passages 104 are formed. The motor 101 is encircled as shown by a tubular funnel 105 which may be a separate moulding or part of a cover 106 which sits on the hood 100. The cover 106 may include an integrally moulded superstructure 107 having side-walls 108, a top 107, a rear wall 109 having an aperture 109A, and a forward aperture 110 within which a pad of air permeable material 111 is located. From Figures 1 and 2 it will be seen that the support 102 is of generally inverted frusto-conical form so that should any unwanted matter or moisture collect around the base of the motor 101, the same is withdrawn downwardly by entrainment in air drawn into the machine by the fan F through the air passages 104.

A collection box 112 nestles, as shown, upon the hood 100 and includes a lid 113 hinged at 114. A lip 112A serves accurately to locate the collection box on a rib 109B forming the lowermost edge of the aperture 109A. A panel 115, which may form part of the lid 113, is formed with a plurality of ventilation louvres 116. Alternatively, the panel 115 may be made from an air permeable material. The panel 115 may be mounted in such a manner within the lid for movement with the lid during opening and closing movements about the hinge 114. If desired, the panel 115 may rest on a ledge (not shown) to bridge that part of the collection box which forms a collection bin and which is revealed upon opening the lid 113. The bin of the collection box has two side walls 118 of which one is shown, front-119, base-120 and rear -walls 121.

When viewed in the cross-section of Figure 1 (as well as in cross-section at right angles to the section plane of Figure 1), the collection box 112 includes a depending "V-shaped" projection 117 which sits within part of a groove extending around the hood and formed by part 100D of the peripheral rim 100A and the skirt 100C. The projection 117 may extend around the collection box to be substantially coextensive with each side wall 118 and the rear part of the peripheral rim 100A.

In the machine of Figure 1, the duct D has an inlet I facing ground datum GD and an outlet O opening into the collector box 112. The outlet O and the inlet I are each defined by a portion 100B of the peripheral rim (described fully later), the portion 121A of the rear wall 121 of the collector box 112 and two side walls 121B and 121C (see Figure 3). Pressure air and entrained grass cuttings/debris from the cutting chamber within the hood 100 enters the duct D through an airflow intensifier passage D1. The airflow intensifier passage D1 is formed between the gently curved region 100D, two opposite side walls 100E and ground datum GD. The inlet of the Duct D and the airflow intensifier passage D1 are positioned in the path of the so-called windrow, that is, a row of grass-cuttings deposited on a cut area by a machine which possesses no collection system. If desired, a plurality of air intensifier passages D1 may be incorporated at ifferent locations around the rim 100A. Further two or more passages D1 may lead into a single duct D. Alternatively, a plurality of ducts may be incorporated in the machine and each duct may be associated with at least one passage D1.

That part of the peripheral rim specifically designated 100B to the right of Figure 1 and defining part of the duct D follows a convex curve which gently merges at 100D into part of the depending skirt 100C of the hood 100. The convexly curved shape of part 100B and at least a part of 100C are, preferably, defined by an aerofoil shape. For convenience of manufacture, the flange 100A and, specifically, parts 100B, 100D and 100C may follow the same shape around the complete periphery of the hood 100. On the other hand, the convexly curved or aerofoil shape of the part 100B may be restricted to that part of 100A within the duct D.

An array of arrows in figure 1 depicts the pattern of air flow which is summarised thus:
i) operation of the fan F creates a suction effect to suck ambient air into the machine both through the aperture 110 and the duct D;
ii) air entering through the aperture 110 serves, inter alia to cool the motor;
iii) air entering and passing through the duct D, comprises two principal components, viz (a) ambient air sucked from the surrounding atmosphere by pressure imbalance in the air circulation system and (b) air entering the duct from beneath the hood and passing into the duct over the convexly curved/aerofoil part 100B.
iv) air entering the grass-collector from duct D and in which air grass cutting and other debris is entrained is filtered through the panel 115 and is drawn into and around the funnel 105 through the passages and 104 thence back to the fan F.

In operation, the mass flow of air produced by the fan F is thus forced down the underside of the peripheral flange 100C and into the airflow intensifier passage, D1 where it increases in velocity as it is forced through a gap formed between the curved region 100D of the rim and the ground datum GD. During passage of thatpart of the said forced air which flows into the duct D via the passage D1 and over the convexly curved/aerofoil part of 100B, a zone of primary negative pressure is generated on the under surfaces of the convexly shaped part 100B. Furthermore, passage of air through the fan F produces secondary negative pressure within the collector box 112 by virtue of aperture 109A.

It will, therefore, be appreciated that the primary and secondary negative pressures are additive and the combined suction effect thereof pulls grass-cuttings and debris into the collection box 112 where filtering through the panel 115 separates the grass-cuttings and, debris from the air stream. Filtered air is then recycled back through the aperture 109A and the fan F leaving the grass and debris to be compacted in the collector.

A second form of grass-cutting machine is shown in figure 2 and this differs from that shown in Figure 1 by virtue of the construction of the collection box 112 and the pattern of airflow.

Referring to Figure 2 it will be seen that the collector box 112 has a lid 200 which is hinged at 201 to a collector base or bin 202. When compared with the collector box 112 of Figure 1, air in which grass cuttings and debris have previously been entrained is vented directly to atmosphere through evacuation louvres 200A and is not recirculated. In this respect it will be recalled that, in the machine of Figure 1, air pressure is filtered through the panel 115 and, thereafter, recirculated.

The cover 106 has a modified superstructure and includes a depending web 203 which effectively extends the funnel 105 so that air sucked through the forward aperture 110 by the fan F is directed solely to the fan F after cooling the motor 101. A further source of incoming air sucked into the machine by the fan F enters via a rear inlet 204 and, after passing around the funnel 105, enters the fan F via the air passages 104. Since the passages 104 are disposed in an annular array around the funnel 105, air will be induced to enter the fan F through all the air passages 104.

The construction of the duct D of the machine shown in Figure 2 is similar to that previously described in connection with Figure 1.

The airflow pattern created during operation of the machine of Figure 2 is as follows:-
i) the mass flow of air induced by the fan F is forced under the peripheral flange of the hood 100 and increases in velocity during passage through the air intensifier passage D1 as previously explained with reference to the machine of Figure 1;
ii) passage of air of increased velocity over the convexly curved aerofoil part 100B produces a negative pressure zone in the region of the entrance I of the duct D thereby inducing an air flow (see arrows X) from the atmosphere which draws the windrow of cut-grass and debris into the collector box 112. The grass cuttings and other debris entrained in the air stream are deposited in the collector box and the air is vented to a atmosphere through louvres 200A.

Thus in contrast with the machine of figure 1, it will be appreciated that the pressure air in the machine of Figure 2 is not recirculated.

The duct D and air intensifier passage D1 including the convexly curved aerofoil part 100B may be positioned as indicated in Figure 1, 2 and 3 at that particular position within the peripheral rim 100A in the path of the grass windrow and at the rear of the hood when considered in the usual cutting mode. Optionally, the duct D and or each passage D1 may be disposed at any position around the rim 100A. In such a case the collection box 112 would naturally be modified to overlie the outlet O or means would be included to lead cut grass into the collection box.

The electric motor 101 may be replaced by an internal combustion engine and, in either cases, drive to the fan F and cutter B may be direct or indirect. In the latter case, drive may be affected through a belt or gearing to allow the motor to be disposed forward of the central region of the hood 100 so as to allow a greater area atop the hood for a larger grass collector 112 positioned more centrally above the air cushion beneath the hood. If desired, the fan F and the cutter B may be driven separately.

According to a modification of the machine described, the convex surface 100B which forms part of the rim 100A may constitute an integral part of the duct D so as to merge with the aerofoil shape of the or each, air intensifier passage D1. Further, the duct D may form a part of a moulding integral with the grass collection device 112 or a separate moulding subsequently attached to the collection device 112.

## Claims

1. A grass cutting machine comprising a hood in the form of an inverted dish enclosing a cutting chamber and having a rim defining an opening which, in use, confronts ground datum, a cutter mounted within the cutting chamber, a driving source for driving the grass-cutter, means for supporting the machine above ground datum, a source for establishing a stream of air for transporting cut-grass entrained in said stream from the cutting chamber into a collection device, at least one channel extending across the rim of the hood, each channel opening towards ground datum and constituting, with ground datum, an air intensifier passage establishing communication between the cutting chamber and the collection device, each channel including a generally convexly shaped flow control surface over which, in use, at least a portion of the stream of air is directed from the cutting chamber so as to create a zone of negative pressure which assists movement of the entrained cut grass over the flow control surface and into the collection device.

2. A grass cutting machine comprising a hood in the form of an inverted dish enclosing a cutting chamber and having a rim defining an opening which, in use, confronts ground datum, a cutter mounted within the cutting chamber, a driving source for driving the grass-cutter, means for supporting the machine above ground datum, a source for establishing a stream of air for transporting cut-grass entrained in said stream from the cutting chamber into a collection device via a duct, the duct including a collection mouth opening towards ground datum and an outlet through which entrained cut grass is passed into the collection device, the rim including at least one channel opening towards ground datum, each channel constituting with ground datum an air intensifier passage establishing communication between the cutting chamber and the collection mouth of the duct, each channel and/or each duct including a generally convexly shaped flow control surface over which, in use, at least a portion of the stream of air is directed after passage from the cutting chamber so as to create a zone of negative pressure which assists movement of the entrained cut grass over the flow control surface and downstream of the duct into the collection device.

3. A grass cutting machine comprising a grass cutter, a driving source for driving the grass cutter, means for supporting the machine above ground datum, a device for collecting grass cut by cutter, a source for establishing a flow of air, the device for collecting cut grass comprising a duct for directing cut grass entrained in a stream of air from the said source and from:
1. a collection mouth at a upstream end thereof and disposed in the region of the ground datum and towards
2. a downstream end thereof for collection by the collection device,
at least one air intensifier outlet passage disposed adjacent to the collection mouth, for leading the stream of air to the collection mouth, each said passage including a generally convexly shaped air flow control surface over which, in use, at least a portion of the said stream is directed so as to create a zone of negative pressure which assists movement of the entrained cut grass over the air flow control surface and downstream through the duct into the device for collecting cut grass.

4. A machine according to claim 2 or claim 3 including a hood in the form of an inverted dish enclosing the cutting chamber and having a outwardly projecting rim.

5. A machine according to claim 4 including means for mounting the grass cutter and the source for establishing a flow of air within the hood wherein each air intensifier passage communicates between the duct and the cutting chamber within the hood.

6. A machine according to any preceding claim wherein each convexly shaped air flow control surface is part of the rim of the hood.

7. A machine according to any preceding claim wherein the device for collecting cut grass includes an air permeable screen for filtering cut grass from the stream of air and wherein the so filtered air from the stream is recirculated under the agency of a fan.

8. A machine according to anyone claims 1 to 6 wherein the device for collecting cut grass includes an air permeable region for filtering cut grass from the stream of air and wherein the so filtered air from the stream is bled to atmosphere

9. A machine according to any preceding claim wherein the generally convexly shaped air flow control surface is of aerofoil shape.

10. A machine according to anyone of claims 1 to 9 wherein the means for supporting the machine above ground datum comprises two or more wheels

11. A machine according to anyone of claims 1 to 9 wherein the means for supporting the machine above ground datum is a cushion of air from the source for establishing a flow of air.

12. A machine according to anyone of claims 10 or 11 including a roller supported from the hood.
